# DEMANDE DE BREVET EUROPEEN

(11) **EP 4 144 918 A1**
(43) Date de publication de la demande: **08.03.2023**
(21) Numéro de dépôt: 22193997.8
(22) Date de dépôt: 05.09.2022
(51) Int. Cl.: E02B 17/02, E02D 13/04, E02D 15/08, E02D 27/52, E02B 17/00

(54) **SYSTÈME POUR LE MAINTIEN TEMPORAIRE, AU COURS DES OPÉRATIONS DE BATTAGE, D'UN PIEU DE FONDATION DESTINÉ À RECEVOIR LE MAT D'UNE ÉOLIENNE OFF-SHORE**

(30) Priorité: 06.09.2021 FR 2109300
(71) Demandeur: REEL, 69450 Saint-Cyr au Mont d'Or (FR)
(72) Inventeur: KONATE, Karamoko, 17220 SAINT ROGATIEN (FR); BOURGOIS, Nicolas, 69410 CHAMPAGNE AU MONT D'OR (FR)
(74) Mandataire: Jacobacci Coralis Harle

(57) **Abrégé**

La présente invention concerne un système pour le maintien temporaire, au cours des opérations de battage, d'un pieu de fondation (E) destiné à recevoir le mat d'une éolienne off-shore.

Le système de maintien temporaire (1) comprend un manchon (2) destiné à recevoir un tronçon dudit pieu de fondation (E) et un châssis porteur (3) destinée à être solidarisée avec un engin flottant (F).

lequel châssis porteur (3) comprend des moyens glissières (32) et des moyens de manœuvre (33), destinés à générer des déplacements dudit manchon (2) selon lesdits deux degrés de liberté en translation (L1, L2).

Les moyens glissières (32) comprennent au moins un élément roulant consistant en un roulement à rouleaux cylindriques.

## Description

### Domaine technique de l'invention

La présente invention concerne le domaine technique des équipements pour la pose des éoliennes off-shore et en particulier des pieu de fondation.

Elle concerne en particulier les systèmes pour le maintien temporaire, au cours des opérations de battage, d'un pieu de fondation destiné à recevoir le mat d'une éolienne off-shore.

### Etat de la technique

Les éoliennes sont des dispositifs qui transforment l'énergie cinétique du vent en énergie électrique.

Elles sont constituées d'un mât (ou tour) portant une nacelle dans laquelle est destiné à tourner un rotor portant des pâles. Au sein de la nacelle, un générateur transforme l'énergie cinétique du rotor en énergie électrique.

A titre indicatif, les éoliennes de 8 MW ont un mat qui peut atteindre 140 mètres de haut, avec un rotor de 164 mètres de diamètre. Il est même envisagé des projets de grandes éoliennes dont la puissance serait comprise entre 10 et 15 MW, avec en corollaire des dimensions encore accrues.

Une implantation précise de la fondation de ces éoliennes constitue un point majeur, ce d'autant plus dans le cas d'éoliennes en mer.

Ces fondations reprennent en effet l'ensemble des charges associées aux poids des équipements (éoliennes) et aux forces s'y appliquant (vent, courant etc.).

Certaines fondations se présentent sous la forme d'un pieu de fondation, dit encore « monopieu ».

L'ancrage dans le sol d'un tel pieu de fondation est alors avantageusement obtenu par des opérations de battage.

Pour cela, le pieu de fondation est positionné au-dessus de son point d'ancrage puis battu dans le sol marin à l'aide d'un équipement de battage (par exemple un marteau hydraulique) jusqu'à la profondeur adaptée.

La mise en œuvre de ces opérations de battage peut être délicate. Il convient en effet de maintenir l'ensemble pieu de fondation / équipement de battage à la verticale du point d'ancrage tout au long du battage.

A cet effet, l'engin de pose est avantageusement équipé d'un moyen de positionnement dynamique ou « DP » (système contrôlé par ordinateur qui permet à un navire de maintenir sa position en utilisant ses propres moyens de propulsion).

Or, ce positionnement dynamique peut être insuffisant pour compenser le mouvement relatif du navire par rapport à la position de pose recherchée et par rapport au pieu de fondation en cours de battage.

La pose d'un parc éolienne nécessite alors une solution efficace pour compenser les mouvements relatifs de l'engin de pose et pour optimiser le maintien temporaire des pieux de fondation dans une position précise, tout au long des opérations de battage.

### Présentation de l'invention

Afin de remédier à l'inconvénient précité de l'état de la technique, la présente invention propose un système pour le maintien temporaire, au cours des opérations de battage, d'un pieu de fondation destiné à recevoir le mat d'une éolienne off-shore. Le système de maintien temporaire, dit encore « pile gripper », comprend :
- un manchon délimitant un conduit traversant, destiné à recevoir un tronçon dudit pieu de fondation et définissant un axe longitudinal, et
- un châssis porteur, qui porte ledit manchon et qui comprend une embase destinée à être solidarisée avec un engin flottant.

Le châssis porteur comprend :
- des moyens glissières, définissant deux degrés de liberté en translation entre ledit manchon et ladite embase, lesdits degrés de liberté en translation s'étendant dans deux plans parallèles, perpendiculairement l'un par rapport à l'autre et perpendiculairement audit axe longitudinal dudit manchon,
et
- des moyens de manœuvre, destinés à générer des déplacements dudit manchon par rapport à ladite embase selon lesdits deux degrés de liberté en translation.

Les moyens glissières comprennent deux modules glissières superposés qui définissent chacun l'un desdits degrés de liberté en translation.

Les modules glissières comprennent chacun :
- au moins un rail comportant au moins un chemin de roulement qui est orienté parallèlement audit degré de liberté en translation associé, et
- au moins un élément roulant destiné à circuler le long dudit au moins un chemin de roulement.

Et Ledit au moins un élément roulant consiste en un roulement à rouleaux cylindriques.

La solution technique selon l'invention confère des mouvements au manchon selon deux degrés de liberté en translation (avantageusement X-Y).

Elle permet encore :
- une rigidité élevée pour assurer une grande précision à toutes les étapes du procédé de pose du pieu de fondation,
- une utilisation réduite des mouvements en cascade pour optimiser la précision,
- une réduction des temps de cycle par un positionnement précis des pieux de fondation,
- optimiser l'encombrement sur l'engin flottant,
- viser des solutions à sécurité intrinsèque,
- faible consommation d'énergie par la réduction de la friction grâce aux roulements à rouleaux cylindrique.

En outre, la mise en oeuvre de roulements à rouleaux cylindriques autorise des mouvements à vitesse élevée selon les deux degrés de liberté en translation.

D'autres caractéristiques non limitatives et avantageuses du produit conforme à l'invention, prises individuellement ou selon toutes les combinaisons techniquement possibles, sont les suivantes :
- le roulement à rouleaux cylindriques comprend un bloc support équipé des rouleaux cylindriques qui sont reliés par des maillons pour former au moins une chaîne de rouleaux cylindriques ; de préférence, la chaîne de rouleaux cylindriques forme une chaîne de rouleaux cylindriques recirculant au sein dudit bloc support, laquelle chaîne de rouleaux cylindriques recirculant comporte un brin actif, coopérant avec un chemin de roulement, et un brin inactif, retour ; de préférence, un roulement à rouleaux cylindriques comprend au moins deux chaînes de rouleaux cylindriques, juxtaposés latéralement, coopérant avec un même chemin de roulement ;
- ledit au moins un rail comporte au moins deux chemins de roulement, à savoir au moins un chemin de roulement supérieure, coopérant avec un roulement à rouleaux cylindriques sus-jacent, au moins un chemin de roulement inférieure, coopérant avec un roulement à rouleaux cylindriques sous-jacent, et éventuellement au moins un chemin de roulement latéral, coopérant avec un roulement à rouleaux cylindriques latéral, de préférence un chemin de roulement latéral intérieur et/ou un chemin de roulement latéral extérieur ;
- un premier module glissière, inférieur et définissant avantageusement un degré de liberté en translation latéral gauche / droite, comporte au moins un rail formant embase, et au moins un élément roulant solidarisé avec au moins un rail d'un second module glissière, supérieur ; ledit second module glissière, supérieur et définissant avantageusement un degré de liberté en translation frontal avant / arrière, comporte au moins un rail solidarisé avec ledit au moins un élément roulant du premier module glissière, et au moins un élément roulant équipant une interface portant ledit manchon en porte-à-faux ;
- le manchon comporte au moins deux portions qui sont mobiles en rotation l'une par rapport à l'autre, autour d'un axe de rotation parallèle à l'axe longitudinal, pour définir deux configurations : une configuration ouverte, définissant un passage radial autorisant le passage d'un pieu de fondation, et une configuration fermée, délimitant le conduit traversant ;
- le manchon comporte des segments d'appui, destinés à prendre appui sur ledit tronçon de pieu de fondation, lesquels segments d'appui sont répartis sur la circonférence dudit axe longitudinal et comprennent chacun une tête d'appui ; ladite tête d'appui comporte avantageusement des premiers rouleaux orientés perpendiculairement à l'axe longitudinal, avantageusement libre en rotation, pour maintenir un contact lors d'un déplacement relatif en translation du pieu de fondation par rapport au manchon, et éventuellement des seconds rouleaux orientés parallèlement à l'axe longitudinal, avantageusement motorisés, pour piloter un déplacement relatif en rotation entre le pieu de fondation et ledit manchon ; de préférence, les premiers rouleaux et/ou les seconds rouleaux coopèrent avec des moyens de manœuvre entre une position escamotée / une position déployée ; également de préférence, un segment d'appui comporte des moyens de manœuvre en translation de sa tête d'appui, selon un axe de translation radial par rapport à l'axe longitudinal du manchon, et/ou des moyens de manœuvreen rotation de sa tête d'appui, selon une trajectoire en arc de cercle dont le centre correspond à l'axe longitudinal du manchon ;
- le système de maintien comporte des moyens de manœuvreen hauteur dudit manchon par rapport à ladite embase, selon un degré de liberté en translation parallèle à l'axe longitudinal dudit manchon ;
- le manchon est équipé de moyens de réduction du bruit de battage, par exemple une barrière sonore sous-marine sous la forme d'un rideaux de bulles, lequel manchon et lesquels moyens de réduction du bruit de battage coopèrent par le biais de moyens de manœuvreen rotation relative, par exemple un couple rails / chariots motorisés ;
- les moyens de manœuvre consistent en des moteurs électriques, lesquels moteurs électriques sont de préférence associés à des moyens de stockage d'énergie électrique de sorte à stocker l'énergie électrique et de sorte à restituer l'énergie électrique dans une phase de manœuvre, ladite énergie électrique étant générée par la source d'alimentation électrique de l'engin flottant équipé et/ou par lesdits moteurs électriques dans une phase de freinage ;
- ledit système de maintien temporaire comporte des moyens de collecte de la position relative entre ledit manchon et ledit engin flottant ; et lesdits moyens de manœuvre sont associés à des moyens de pilotage adaptés à piloter lesdits moyens de manœuvre tenant compte de ladite position relative entre ledit manchon et ledit engin flottant afin de piloter ledit manchon selon lesdits deux degrés de liberté en translation, de préférence pour garder une géolocalisation, voire une verticalité.

La présente invention concerne encore un engin flottant, comportant :
- un système de maintien temporaire selon l'invention, et
- un système de battage dudit pieu de fondation maintenu dans ledit système de maintien temporaire.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue générale et en perspective d'un système pour le maintien temporaire, au cours des opérations de battage, d'un pieu de fondation destiné à recevoir le mat d'une éolienne off-shore ;
[Fig. 2] est une vue générale et de dessus du système de maintien temporaire selon la figure 1, dans laquelle le manchon est en configuration fermée autour d'un pieu de fondation ;
[Fig. 3] est une vue partielle et agrandie du système de maintien temporaire selon la figure 1, montrant la structure de ses moyens glissières ;
[Fig. 4] est une autre vue partielle et agrandie du système de maintien temporaire selon la figure 1, illustrant également la structure des moyens glissières ;
[Fig. 5] est une vue isolée, en perspective (A) et en coupe (B), d'un élément roulant équipant les moyens glissières ;
[Fig. 6] est une vue générale et de côté qui représente le manchon dans une position escamotée et relevée (A) puis dans une position déployée et abaissée (B) ;
[Fig. 7] est une vue générale et de dessus du système de maintien temporaire selon la figure 1, dans laquelle le manchon est en configuration ouverte pour définir un passage radial autorisant l'entrée/la sortie du pieu de fondation ;
[Fig. 8] est une vue isolée et agrandie d'un segment d'appui équipant le manchon, destiné à prendre appui sur un tronçon de pieu de fondation ;
[Fig. 9] est une vue partielle et agrandie des moyens de manœuvre en rotation relative entre le manchon et les moyens de réduction du bruit de battage.

Il est à noter que, sur ces figures, les éléments structurels et/ou fonctionnels communs aux différentes variantes peuvent présenter les mêmes références.

Le système de maintien temporaire 1, décrit ci-après en relation avec les figures, consiste en un système pour le maintien temporaire d'un pieu de fondation E destiné à recevoir le mat d'une éolienne off-shore (non représentée).

De manière générale, une éolienne comprend avantageusement trois parties principales :
- un mât,
- une nacelle positionnée au sommet du mât, et
- un rotor composé de trois pales insérées sur un moyeu.

Une éolienne off-shore, ou « éolienne en mer », est destinée à être implantée sur une fondation qui est ancrée dans le fond marin.

Dans une telle éolienne off-shore, l'énergie électrique est avantageusement transmise au pied de la tour où elle est adaptée par un convertisseur et un transformateur, de sorte à être exportée vers un poste électrique en mer via des câbles inter-éoliennes.

Le mât de l'éolienne off-shore est rapporté ici sur un pieu de fondation E, dite encore « monopieu » ou, en anglais « pile » ou « monopile », destiné à être implanté dans le fond marin par des opérations de battage.

Le mât est généralement relié à ce pieu de fondation E par l'intermédiaire d'une jointure surmontée par une pièce de transition.

Le système de maintien temporaire 1 est en particulier adapté à maintenir ce pieu de fondation E au cours des opérations de battage.

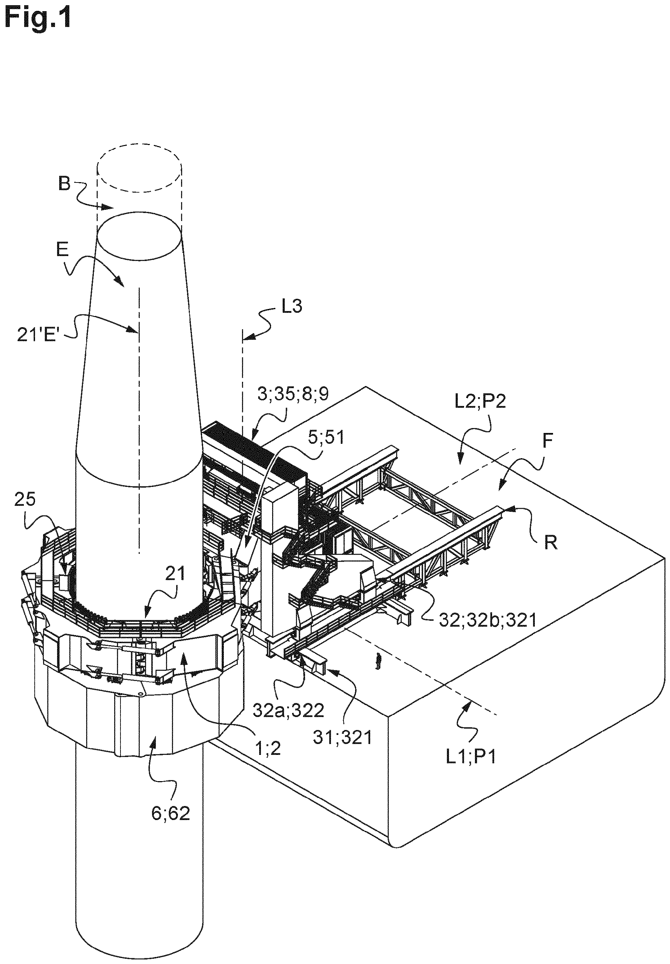

Pour cela, ce système de maintien temporaire 1 est avantageusement destiné à équiper un engin flottant F (illustré très partiellement et schématiquement sur la figure 1) qui est adapté à la pose des pieux de fondation E par battage, voire aussi la pose des éoliennes off-shore sur les pieux de fondation E installés.

De préférence, un tel engin flottant F comporte :
- un système de maintien temporaire 1 selon l'invention, équipant avantageusement son pont,
- un système de battage B dudit pieu de fondation E maintenu dans le système de maintien temporaire 1, et
- de préférence un moyen de positionnement dynamique ou « DP », classique en soi (système contrôlé par ordinateur qui permet à un navire de maintenir sa position en utilisant ses propres moyens de propulsion).

Le système de battage B, par exemple un marteau hydraulique, est destiné à surmonter le pieu de fondation E maintenu par le système de maintien temporaire 1 et à impacter axialement l'extrémité supérieure libre de ce pieu de fondation E pour assurer son ancrage dans le sol.

Un tel pieu de fondation E, généralement réalisé en acier, est maintenu et guidé verticalement par le système de maintien temporaire 1 au cours de son ancrage dans le sol par enfoncement grâce aux opérations de battage.

Ce système de maintien temporaire 1 est notamment utile pour assurer une compensation active du mouvement relatif de l'engin flottant F par rapport au pieu de fondation E en cours de battage.

Pour cela, selon l'invention, le système de maintien temporaire 1, dit encore « pile gripper », comprend :
- un manchon 2 délimitant un conduit traversant 21 qui est destiné à recevoir un tronçon du pieu de fondation E et qui définit un axe longitudinal 21' (dit encore axe longitudinal du manchon), et
- un châssis porteur 3, qui porte ledit manchon 2 et qui comprend une embase 31 (avantageusement fixe) destinée à être solidarisée avec un engin flottant F.

Le manchon 2 est avantageusement destiné à ceinturer / enserrer un tronçon du pieu de fondation E et à maintenir l'axe longitudinal E' de ce pieu de fondation E selon une orientation verticale et selon une géolocalisation déterminée.

Pour cela, le châssis porteur 3 pilote le manchon 2 selon deux degrés de liberté en translation L1, L2 (avantageusement en X-Y) qui sont perpendiculaires à l'axe longitudinal 21' de son conduit traversant 21 (avantageusement en Z).

Le châssis porteur 3 vise ainsi à maintenir une géolocalisation déterminée du manchon 2, tout au long des opérations de battage.

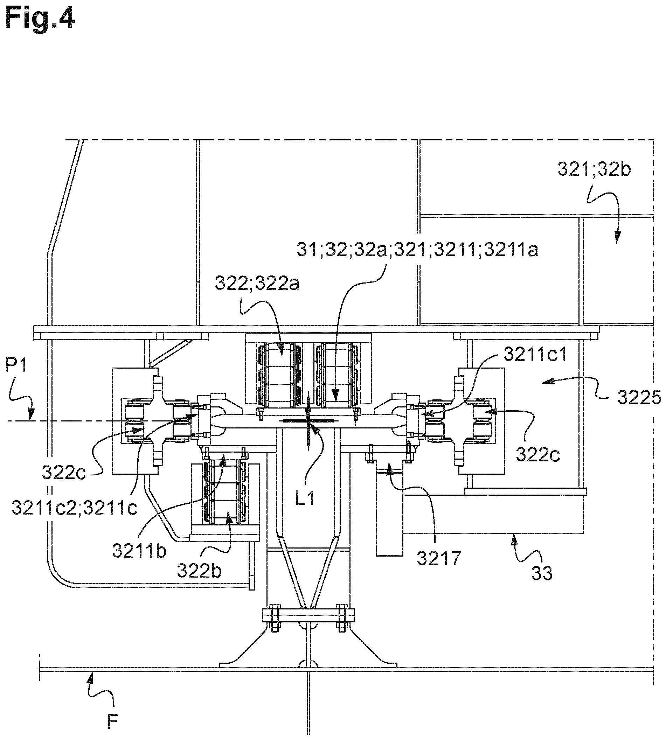

A cet effet, tel qu'illustré plus en détail sur les figures 1 à 4, le châssis porteur 3 comprend :
- des moyens glissières 32, définissant les deux degrés de liberté en translation L1, L2 entre le manchon 2 et l'embase 31, et
- des moyens de manœuvre 33 (figure 4), destinés à générer des déplacements du manchon 2 par rapport à l'embase 31, selon les deux degrés de liberté en translation L1, L2.

### Moyens glissières

Les moyens glissières 32 sont agencés pour définir les deux degrés de liberté en translation L1, L2.

Les deux degrés de liberté en translation L1, L2 s'étendent respectivement dans deux plans parallèles P1, P2, superposés et avantageusement parallèlement au plan défini par le pont de l'engin flottant F.

Les deux degrés de liberté en translation L1, L2 sont également :
- perpendiculaires l'un par rapport à l'autre, et
- perpendiculaires à l'axe longitudinal 21' dudit manchon 2 (destiné à s'étendre avantageusement verticalement).

Pour cela, les moyens glissières 32 comprennent deux modules glissières 32a, 32b superposés qui définissent chacun l'un des deux degrés de liberté en translation L1, L2 précités.

Selon l'invention, tel qu'illustré notamment sur la figure 4, les modules glissières 32a, 32b comprennent chacun :
- au moins un rail 321, de préférence au moins deux rails 321, comportant au moins un chemin de roulement 3211 qui est orienté parallèlement au degré de liberté en translation L1, L2 associé, et
- au moins un élément roulant 322 destiné à circuler le long dudit au moins un chemin de roulement 3211.

Selon un mode de réalisation préféré, les modules glissières 32a, 32b sont avantageusement superposés, avec :
- un premier module glissière 32a, inférieur et définissant avantageusement un degré de liberté en translation L1 latéral gauche / droite, correspondant avantageusement à une direction poupe / proue de l'engin flottant F,
- un second module glissière 32b, supérieur et définissant avantageusement un degré de liberté en translation L2 frontal avant / arrière, correspondant avantageusement à une direction bâbord / tribord de l'engin flottant F.

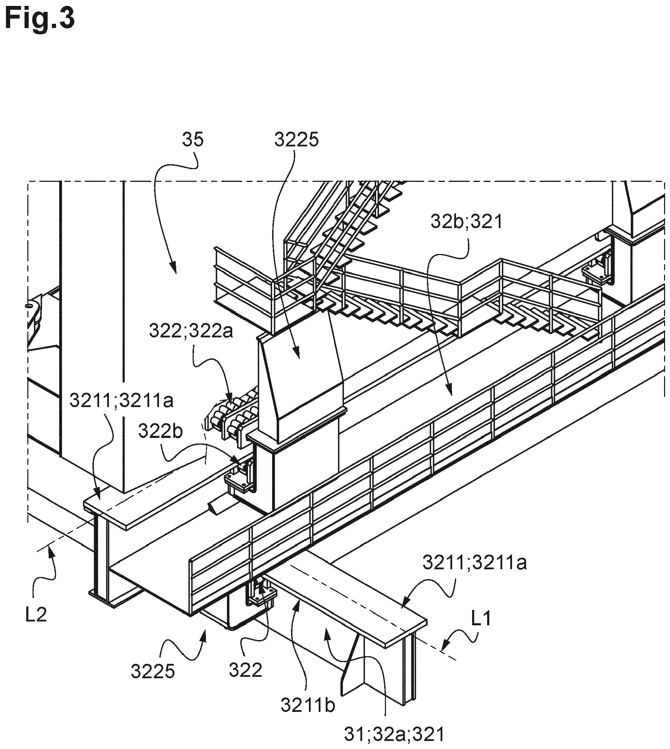

Tel qu'illustré notamment sur les figures 3 et 4, le premier module glissière 32a, inférieur, comporte :
- au moins un rail 321 formant embase 31, avantageusement sous-jacent, et
- au moins un élément roulant 322 qui est solidarisé avec au moins un rail 321, avantageusement sus-jacent, constitutif du second module glissière 32b, supérieur.

En d'autres termes, ledit au moins un rail 321 du second module glissière 32b est ici équipé dudit au moins un élément roulant 322 coopérant avec ledit au moins un rail 321 du premier module glissière 32a.

Tel qu'illustré notamment sur la figure 3, le second module glissière 32b, supérieur, comporte :
- au moins un rail 321, avantageusement sous-jacent, portant ledit au moins un élément roulant 322 du premier module glissière 32a, et
- au moins un élément roulant 322 équipant une interface 35 du châssis porteur 3, avantageusement sus-jacent, qui porte le manchon 2 en porte-à-faux.

En d'autres termes, l'interface 35 est ici équipée dudit au moins un élément roulant 322 du second module glissière 32b.

Ledit au moins un rail 321 du premier module glissière 32a, inférieur, est avantageusement perpendiculaire audit au moins un rail 321 du second module glissière 32b, supérieur.

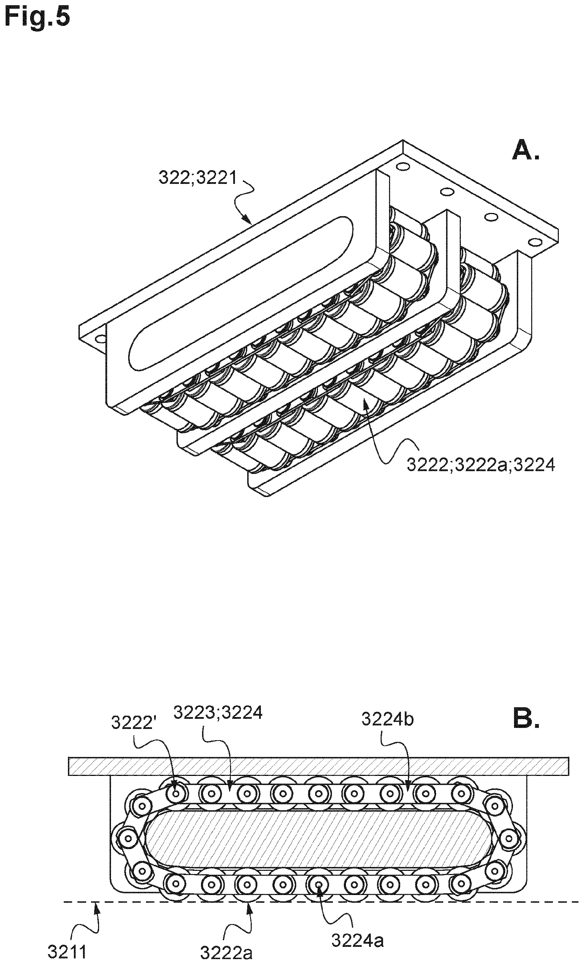

Encore selon l'invention, ledit au moins un élément roulant 322 consiste en un roulement à rouleaux cylindriques 322 (voir notamment la figure 5).

Ce roulement à rouleaux cylindriques 322 comportent plusieurs rouleaux cylindriques 3222.

Chaque rouleau cylindrique 3222 comporte avantageusement une surface de roulement cylindrique 3222a qui est destinée à rouler sur un chemin de roulement 3211 et qui définit un axe longitudinal 3222' qui est parallèle à ce même chemin de roulement 3211 (figure 5).

Chaque rouleau cylindrique 3222 est apte à pivoter librement autour de son axe longitudinal 3222' lors du roulement le long du chemin de roulement 3211.

Selon un mode de réalisation préféré illustré sur la figure 5, un roulement à rouleaux cylindriques 322 comprend un bloc support 3221 équipé des rouleaux cylindriques 3222 qui sont reliés par des maillons 3223 pour former au moins une chaîne de rouleaux cylindriques 3224.

Les axes longitudinaux 3222' des rouleaux cylindriques 3222 équipant un élément roulant 322 s'étendent avantageusement parallèlement les uns par rapport aux autres.

De préférence, une telle chaîne de rouleaux cylindriques 3224 forme une chaîne de rouleaux cylindriques 3224 recirculant au sein du bloc support 3221.

La chaîne de rouleaux cylindriques 3224 recirculant comporte ainsi :
- un brin actif 3224a, frontal ou avant, avantageusement rectiligne, coopérant avec un chemin de roulement 3211, et
- un brin inactif 3224b, retour, arrière.

Un roulement à rouleaux cylindriques 322 comprend avantageusement au moins deux chaînes de rouleaux cylindriques 3224 (voire uniquement deux chaînes de rouleaux cylindriques 3224) qui sont juxtaposés latéralement, de préférence au sein d'un même bloc support 3221.

Lesdites au moins deux chaînes de rouleaux cylindriques 3224 coopèrent avec un même chemin de roulement 3211.

De manière générale, ledit au moins un rail 321 comporte avantageusement au moins deux chemins de roulement 3211 (figure 4), à savoir parmi :
- au moins un chemin de roulement 3211a supérieure (de préférence parallèle, et opposé, au pont de l'engin flottant F), avantageusement horizontal, coopérant avec un roulement à rouleaux cylindriques 322a sus-jacent,
- au moins un chemin de roulement 3211b inférieure (de préférence parallèle, et en regard, du pont de l'engin flottant F), avantageusement horizontal, coopérant avec un roulement à rouleaux cylindriques 322b sous-jacent, et éventuellement
- au moins un chemin de roulement 3211c latéral (de préférence perpendiculaire au pont de l'engin flottant F), avantageusement vertical, coopérant avec un roulement à rouleaux cylindriques 322c latéral, de préférence un chemin de roulement 3211c1 latéral intérieur (en regard d'un second rail 321) et/ou un chemin de roulement 3211c2 latéral extérieur (à l'opposé d'un second rail 321).

Un tel rail 321 présente avantageusement une section en T, dont la branche supérieure horizontale forme les différents chemins de roulement 3211, avec de préférence :
- la surface supérieure de la branche supérieure forme ledit moins un chemin de roulement 3211a supérieure,
- la surface inférieure de la branche supérieure forme ledit au moins un chemin de roulement 3211b inférieure et
- l'un au moins des bords de la branche supérieure forme ledit au moins un chemin de roulement 3211c latéral.

Les différents roulements à rouleaux cylindriques 322, coopérant avec les différents chemins de roulement 3211, sont avantageusement portés par un chariot 3225, avantageusement en forme général de C s'ouvrant vers le pont de l'engin flottant F (figure 4).

Une telle combinaison de chemins de roulement 3211 est utile pour conférer un guidage optimale selon chaque degré de liberté en translation L1, L2, en particulier tenant compte des efforts relatifs exercés entre le manchon 2 et le pieu de fondation E.

Encore de manière générale, un chemin de roulement 3211 présente avantageusement une surface plane qui est parallèle à l'axe longitudinal 3222' des rouleaux cylindriques 3222 associés.

### Moyens de manœuvre associés aux moyens glissières

Les moyens de manœuvre 33, associés aux moyens glissières 32, consistent avantageusement en des moteurs électriques.

Les moteurs électriques 33 coopèrent avantageusement avec des crémaillères 3217 portées par ledit au moins un rail 321 (figure 4).

De tels moteurs électriques 33 sont de préférence associés à des moyens de stockage d'énergie électrique (non représentés) qui sont prévus pour stocker l'énergie électrique et pour restituer l'énergie électrique dans une phase de manœuvre.

En particulier, les moyens de stockage d'énergie électrique sont prévus pour stocker l'énergie électrique générée par :
- la source d'alimentation électrique de l'engin flottant F équipé et/ou
- ces moteurs électriques 33 dans une phase de freinage (restitution).

Les moyens de stockage d'énergie électrique sont choisis avantageusement parmi au moins un condensateur, un supercondensateur, une batterie ou un moteur / générateur avec volant.

Les moyens de stockage d'énergie électrique peuvent comprendre plusieurs condensateurs, supercondensateurs, batteries ou moteurs / générateurs avec volant, connectés en série, connectés en parallèle, ou toute combinaison de ceux-ci.

### Manchon

Comme évoqué précédemment, le manchon 2 est avantageusement destiné à ceinturer / enserrer un tronçon du pieu de fondation E et à maintenir l'axe longitudinal E' de ce pieu de fondation E selon une orientation verticale.

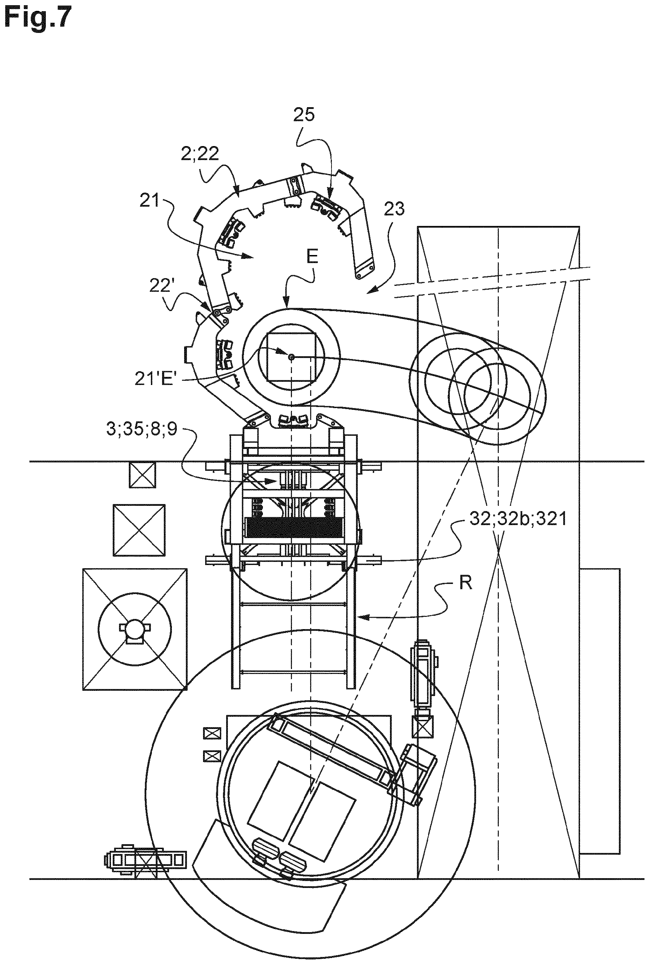

Le manchon 2, destiné à recevoir un tronçon du pieu de fondation E, comporte avantageusement au moins deux portions 22 qui sont mobiles en rotation l'une par rapport à l'autre, autour d'un axe de rotation 22' parallèle à l'axe longitudinal 21' du manchon 2 (figure 7).

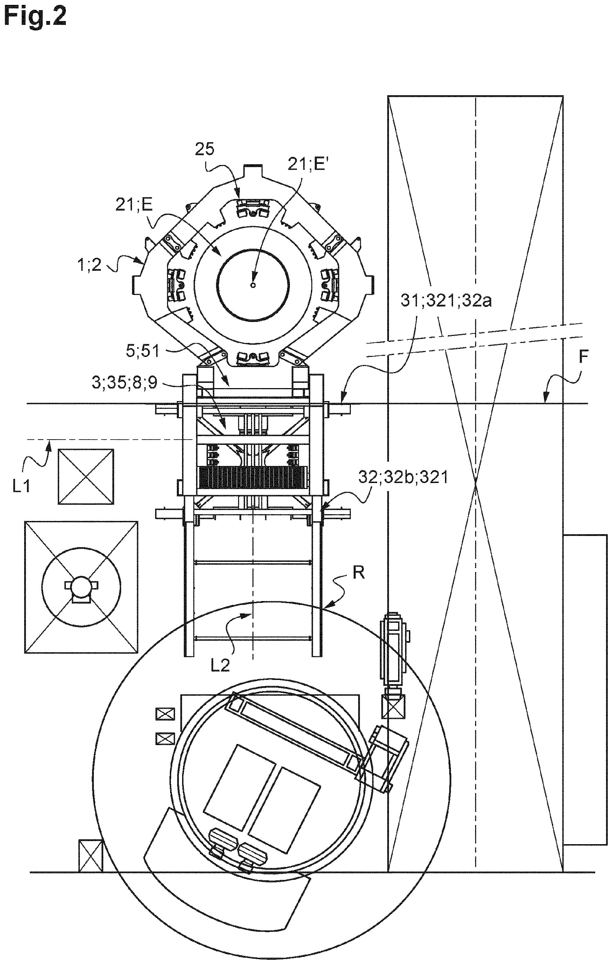

Ces portions 22, mobiles, définissent ainsi deux configurations :
- une configuration ouverte (figure 7), définissant un passage radial 23 autorisant l'entrée et/ou la sortie d'un pieu de fondation E (vers le conduit traversant 21 ou hors du conduit traversant 21), par exemple au moyen d'une grue de manœuvre, et
- une configuration fermée (figure 2), délimitant le conduit traversant 21.

Dans la configuration fermée, le conduit traversant 21 est fermé sur sa circonférence ; il débouche au-dessus et au-dessous dudit conduit traversant 21.

Encore de manière générale, le manchon 2 comporte avantageusement des segments d'appui 25, destinés à prendre appui sur le tronçon du pieu de fondation E.

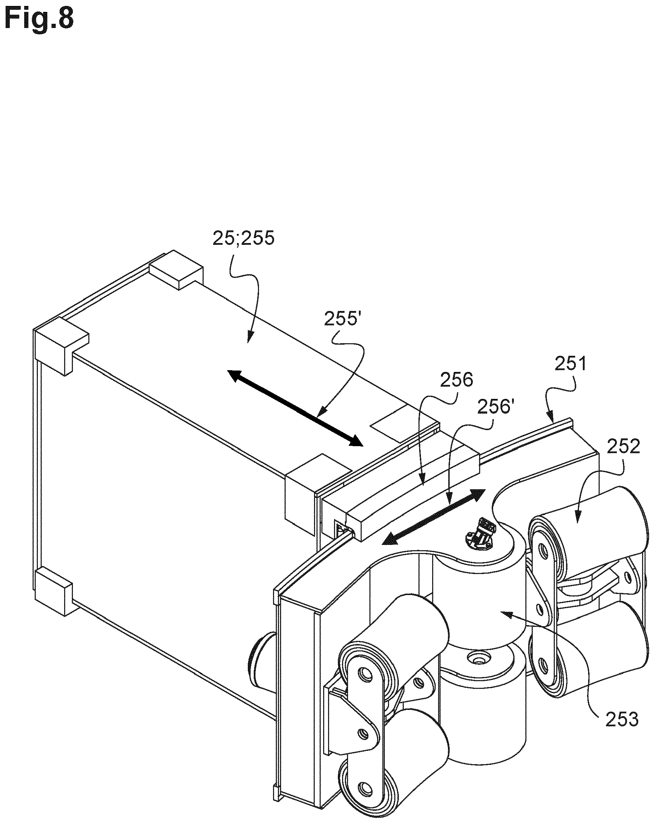

L'un de ces segments d'appui 25 est illustré par en détails sur la figure 8.

Les segments d'appui 25, par exemple au nombre de trois ou quatre, sont répartis sur la circonférence de l'axe longitudinal 21' du conduit traversant 21 et comprennent chacun une tête d'appui 251.

Pour coopérer avec le tronçon du pieu de fondation E, la tête d'appui 251 comporte avantageusement un combinaison de rouleaux 252, 253, à savoir :
- des premiers rouleaux 252 orientés perpendiculairement à l'axe longitudinal 21' du manchon 21, avantageusement libre en rotation, pour maintenir un contact lors d'un déplacement relatif en translation du pieu de fondation E par rapport au manchon 2, et éventuellement
- des seconds rouleaux 253 orientés parallèlement à l'axe longitudinal 21' du manchon 2, avantageusement motorisés, pour piloter un déplacement relatif en rotation entre le pieu de fondation E et le manchon 2.

Les premier rouleaux 252 sont en particulier destinés à cheminer sur la longueur du pieu de fondation E lors des opérations de battage et aussi pour compenser les mouvements verticaux de l'engin flottant F.

Les seconds rouleaux 253 sont utiles pour manœuvrer le pieu de fondation E autour de son axe longitudinal avant la pose au sol.

De préférence, les premiers rouleaux 252 et/ou les seconds rouleaux 253 coopèrent avec des moyens de manœuvre (non représentés) entre une position escamotée / une position déployée.

Ces moyens de manœuvre, par exemple une motorisation électrique, sont utiles pour positionner, alternativement, les premiers rouleaux 252 et les seconds rouleaux 253 en contact avec le pieu de fondation E.

Encore de préférence, un segment d'appui 25 comporte des moyens de manœuvre complémentaires, à savoir :
- des moyens de manœuvre 255 en translation de sa tête d'appui 251, selon un axe de translation radial 255' par rapport à l'axe longitudinal 21' du manchon 2, et/ou
- des moyens de manœuvre 256 en rotation de sa tête d'appui 251, selon une trajectoire en arc de cercle 256' dont le centre correspond à l'axe longitudinal 21' du manchon 2.

Les moyens de manœuvre 255 en translation consistent par exemple des vérins électriques ou des vérins hydrauliques. Ils sont utiles pour ajuster la tête d'appui 251 en fonction du diamètre du pieu de fondation E et pour tenir compte des éventuelles variations de diamètre de ce dernier lors des opérations de battage.

Les moyens de manœuvre 256 en rotation consistent par exemple en un système de glissière associé à un couple pignon / couronne. Ils sont utiles pour suivre le mouvement en lacet de l'engin flottant F autour de l'axe longitudinal E' du pieu de fondation E pendant le battage tout en maintenant le contact des premiers rouleaux 252 avec ce pieu de fondation E.

### Moyens de manœuvre en hauteur du manchon

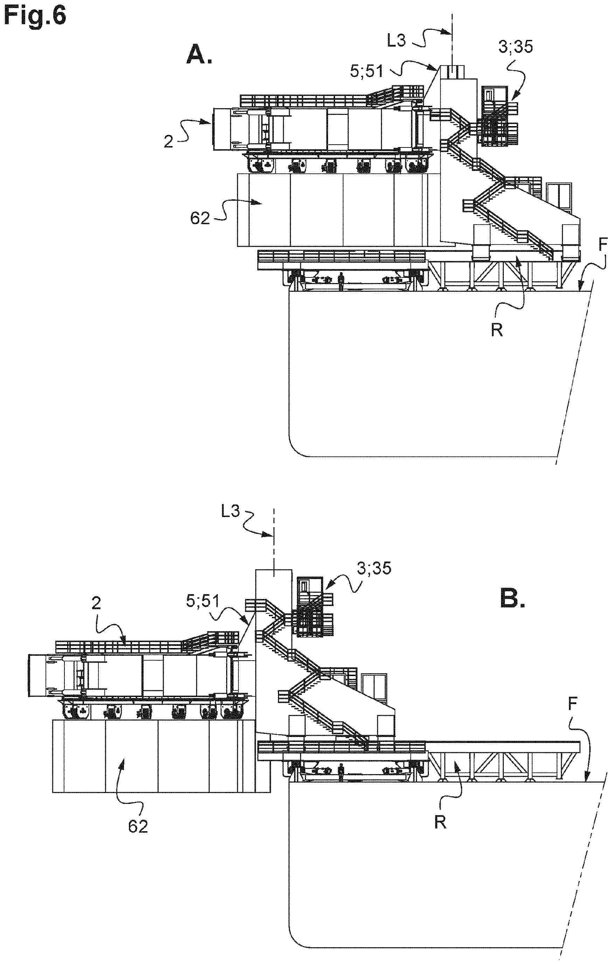

Encore de manière générale, le système de maintien temporaire 1 comporte avantageusement des moyens de manœuvre 5 en hauteur du manchon 2 par rapport à l'embase 31 (figures 1 et 6).

Cette manœuvre en hauteur définit ainsi un degré de liberté en translation L3 qui est parallèle à l'axe longitudinal 21' du manchon 2.

En l'espèce, les moyens de manœuvre 5 consistent en un chariot 51, motorisé, équipant le châssis porteur 3 (et en particulier son interface 35).

Ces moyens de manœuvre 5 en hauteur sont en particulier utiles pour la manœuvre du manchon 2 entre deux positions :
- une position relevée (Figure 6, A), utile pour escamoter le manchon 2 au-dessus du pont de l'engin flottant F, et
- une position abaissée (Figure 6, B), utile pour déployer le manchon 2 en porte-à-faux par rapport au pont de l'engin flottant F et pour diminuer la distance par rapport au niveau de la mer.

Pour obtenir une position escamoté optimale, le système de maintien temporaire 1 comporte encore avantageusement au moins un rail de stockage R qui est implanté parallèlement audit au moins un rail 321 du second module glissière 32b.

Ledit au moins un rail de stockage R est adapté pour venir dans le prolongement dudit audit au moins un rail 321 du second module glissière 32b, en vue du transfert du manchon 2 (avec son interface 35) depuis le second module glissière 32b jusqu'audit au moins un rail de stockage R.

### Moyens de réduction du bruit de battage

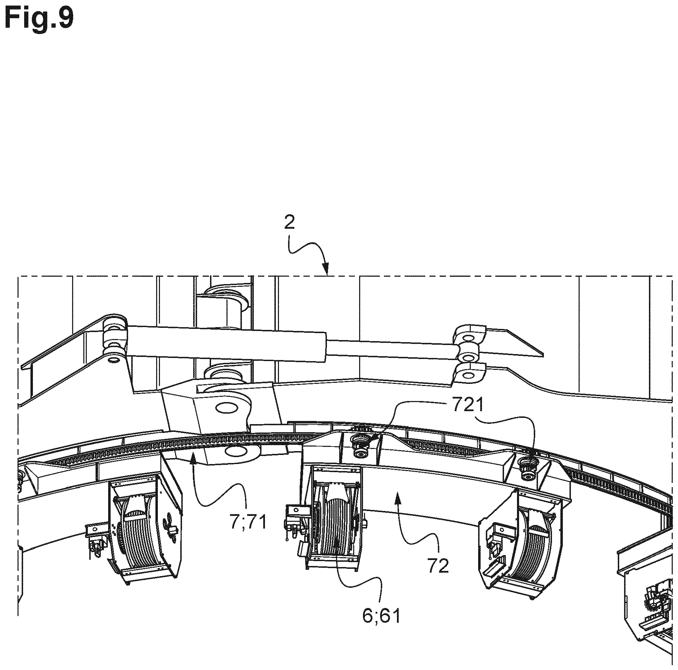

Le manchon 2 est encore avantageusement équipé de moyens de réduction du bruit de battage 6 (figures 1 et 9), de préférence classique en soi.

Les moyens de réduction du bruit de battage 6 consistent par exemple en une barrière sonore sous-marine sous la forme d'un rideaux de bulles, dont les treuils de déploiement 61 sont illustrés sur la figure 9.

Ces treuils de déploiement 61 sont avantageusement logés dans un panier 62 qui est sous-jacent du manchon 2.

Le manchon 2 et les moyens de réduction du bruit de battage 6 coopèrent par le biais de moyens de manœuvre 7 en rotation relative (figure 9).

Ces moyens de manœuvre 7 en rotation relative permettent un maintien de la position angulaire des moyens de réduction du bruit de battage 6 par rapport au pieu de fondation E, lors des mouvements de rotation relative entre le manchon 2 et ce pieu de fondation E.

Les moyens de manœuvre 7 en rotation relative consistent par exemple un couple rails 71 / chariots motorisés 72.

Les rails 71 consistent avantageusement en une couronne qui est portée sous le manchon 2 et qui est concentrique avec l'axe longitudinal 21' du manchon 2.

Les chariots motorisés 72 coulissent le long des rails 71 et comportent des moteurs électriques 721 coopérant avec ses rails 71 ; ces chariots motorisés 72 circulent ainsi selon une trajectoire circulaire qui est concentrique de l'axe longitudinal 21' du manchon 2.

### Moyens de collecte de position relative et moyens de pilotage

Le système de maintien temporaire 1 comporte encore avantageusement des moyens de collecte 8 de la position relative, avantageusement en temps réel, entre le manchon 2 et l'engin flottant F (figure 1).

Ces moyens de de collecte 8 de la position relative comportent en particulier :
- un module de collecte de la géolocalisation, respective, du manchon 2 et de l'engin flottant F, avantageusement dans un référentiel de géolocalisation, et
- un module de traitement, pour déterminer la position relative entre le manchon 2 et l'engin flottant F.

Le système de maintien temporaire 1 comporte encore des moyens de pilotage 9, associés aux moyens de manœuvre 33 équipant les moyens glissière 32, qui sont adaptés à piloter lesdits moyens de manœuvre 33 tenant compte de ladite position relative issue des moyens de collecte 8 (entre ledit manchon 2 et ledit engin flottant F).

Les moyens de pilotage 9 constituent ainsi avantageusement un système contrôlé par ordinateur qui permet de maintenir, en continu, la position du manchon 2 (compensant les mouvements occasionnés par les vagues), en utilisant les moyens de manœuvre 33 de sorte à garder une position de l'axe longitudinal 21' du conduit traversant 21 à un point de géolocalisation cible / consigne.

Les moyens de pilotage 9 assurent ainsi une manœuvre, continue, du manchon 2 selon les deux degrés de liberté en translation L1, L2 précités (axes en X et Y), de sorte à assurer une compensation active des mouvements de l'engin flottant F et de sorte à maintenir une géolocalisation précise, voire une verticalité, de ce manchon 2 au cours des opérations de battage.

Ces moyens de pilotage 9 stabilisent, activement et en continu, la position du manchon 2 sur un axe vertical (axe Z), par le pilotage de ce manchon 2 selon les deux degrés de liberté en translation L1, L2 précités (axes en X et Y), de préférence tout au long des opérations de battage.

Bien entendu, diverses autres modifications peuvent être apportées à l'invention dans le cadre des revendications annexées.

## Revendications

1. Système pour le maintien temporaire, au cours des opérations de battage, d'un pieu de fondation (E) destiné à recevoir le mat d'une éolienne off-shore,
lequel système de maintien temporaire (1) comprend :
- un manchon (2) délimitant un conduit traversant (21), destiné à recevoir un tronçon dudit pieu de fondation (E) et définissant un axe longitudinal (21'), et
- un châssis porteur (3), qui porte ledit manchon (2) et qui comprend une embase (31) destinée à être solidarisée avec un engin flottant (F),
lequel châssis porteur (3) comprend :
- des moyens glissières (32), définissant deux degrés de liberté en translation (L1, L2) entre ledit manchon (2) et ladite embase (31), lesdits degrés de liberté en translation (L1, L2) s'étendant dans deux plans parallèles, perpendiculairement l'un par rapport à l'autre et perpendiculairement audit axe longitudinal (21') dudit manchon (2), et
- des moyens de manœuvre (33), destinés à générer des déplacements dudit manchon (2) par rapport à ladite embase (31) selon lesdits deux degrés de liberté en translation (L1, L2),
lesquels moyens glissières (32) comprennent deux modules glissières (32a, 32b) superposés qui définissent chacun l'un desdits degrés de liberté en translation (L1, L2), lesquels modules glissières (32a, 32b) comprennent chacun :
- au moins un rail (321) comportant au moins un chemin de roulement (3211) qui est orienté parallèlement audit degré de liberté en translation (L1, L2) associé, et
- au moins un élément roulant (322) destiné à circuler le long dudit au moins un chemin de roulement (3211),
lequel au moins un élément roulant (322) consiste en un roulement à rouleaux cylindriques (322).

2. Système de maintien temporaire, selon la revendication 1, **caractérisé en ce que** ledit roulement à rouleaux cylindriques (322) comprend un bloc support (3221) équipé des rouleaux cylindriques (3222) qui sont reliés par des maillons (3223) pour former au moins une chaîne de rouleaux cylindriques (3224).

3. Système de maintien temporaire, selon la revendication 2, **caractérisé en ce que** ladite chaîne de rouleaux cylindriques (3224) forme une chaîne de rouleaux cylindriques (3224) recirculant au sein dudit bloc support (3221), laquelle chaîne de rouleaux cylindriques (3224) recirculant comporte :
- un brin actif (3224a), coopérant avec un chemin de roulement (3211), et
- un brin inactif (3224b), retour.

4. Système de maintien temporaire, selon l'une quelconque des revendications 1 à 3, **caractérisé en ce que** ledit au moins un rail (321) comporte au moins deux chemins de roulement (3211), à savoir :
- au moins un chemin de roulement (3211a) supérieure, coopérant avec un roulement à rouleaux cylindriques (322a) sus-jacent,
- au moins un chemin de roulement (3211b) inférieure, coopérant avec un roulement à rouleaux cylindriques (322b) sous-jacent et éventuellement
- au moins un chemin de roulement (3211c) latéral, coopérant avec un roulement à rouleaux cylindriques (322c) latéral.

5. Système de maintien temporaire, selon l'une quelconque des revendications 1 à 4, **caractérisé en ce que** :
- un premier module glissière (32a), inférieur et définissant avantageusement un degré de liberté en translation (L1) latéral gauche / droite, comporte :
-- au moins un rail (321) formant embase (31), et
-- au moins un élément roulant (322) solidarisé avec au moins un rail (321) d'un second module glissière (32b), supérieur, et
- ledit second module glissière (32b), supérieur et définissant avantageusement un degré de liberté en translation (L2) frontal avant / arrière, comporte :
-- au moins un rail (321) solidarisé avec ledit au moins un élément roulant (322) du premier module glissière (32a), et
-- au moins un élément roulant (322) équipant une interface (35) portant ledit manchon (2) en porte-à-faux.

6. Système de maintien temporaire, selon l'une quelconque des revendications 1 à 5, **caractérisé en ce que** le manchon (2) comporte au moins deux portions (22) qui sont mobiles en rotation l'une par rapport à l'autre, autour d'un axe de rotation (22') parallèle à l'axe longitudinal (21') du conduit traversant (21), pour définir deux configurations :
- une configuration ouverte, définissant un passage radial (23) autorisant le passage d'un pieu de fondation (E), et
- une configuration fermée, délimitant le conduit traversant (21).

7. Système de maintien temporaire, selon l'une quelconque des revendications 1 à 6, **caractérisé en ce que** le manchon (2) comporte des segments d'appui (25), destinés à prendre appui sur ledit tronçon de pieu de fondation (E),
lesquels segments d'appui (25) sont répartis sur la circonférence dudit axe longitudinal (21') et comprennent chacun une tête d'appui (251).

8. Système de maintien temporaire, selon la revendication 7, **caractérisé en ce que** ladite tête d'appui (251) comporte :
- des premiers rouleaux (252) orientés perpendiculairement à l'axe longitudinal (21') du conduit traversant (21), avantageusement libre en rotation, pour maintenir un contact lors d'un déplacement relatif en translation du pieu de fondation (E) par rapport au manchon (2), et éventuellement
- des seconds rouleaux (253) orientés parallèlement à l'axe longitudinal (21') du conduit traversant (21), avantageusement motorisés, pour piloter un déplacement relatif en rotation entre le pieu de fondation (E) et ledit manchon (2).

9. Système de maintien temporaire, selon l'une quelconque des revendications 7 ou 8, **caractérisé en ce qu'**un segment d'appui (25) comporte :
- des moyens de manœuvre (255) en translation de sa tête d'appui (251), selon un axe de translation radial (255') par rapport à l'axe longitudinal (21') du conduit traversant (21), et/ou
- des moyens de manœuvre (256) en rotation de sa tête d'appui (251), selon une trajectoire en arc de cercle (256') dont le centre correspond à l'axe longitudinal (21') du conduit traversant (21).

10. Système de maintien temporaire, selon l'une quelconque des revendications 1 à 9, **caractérisé en ce que** le manchon (2) est équipé de moyens de réduction du bruit de battage (6), par exemple une barrière sonore sous-marine sous la forme d'un rideaux de bulles,
lequel manchon (2) et lesquels moyens de réduction du bruit de battage (6) coopèrent par le biais de moyens de manœuvre (7) en rotation relative.

11. Système de maintien temporaire, selon l'une quelconque des revendications 1 à 10, **caractérisé en ce que** les moyens de manœuvre (33) consistent en des moteurs électriques,
lesquels moteurs électriques (33) sont de préférence associés à des moyens de stockage d'énergie électrique de sorte à stocker l'énergie électrique générée par la source d'alimentation électrique de l'engin flottant (F) équipé et/ou par lesdits moteurs électriques (33) dans une phase de freinage, et de sorte à restituer l'énergie électrique dans une phase de manœuvre.

12. Système de maintien temporaire, selon l'une quelconque des revendications 1 à 11, **caractérisé en ce que** ledit système de maintien temporaire (1) comporte des moyens de collecte (8) de la position relative entre ledit manchon (2) et ledit engin flottant (F),
et **en ce que** lesdits moyens de manœuvre (33) sont associés à des moyens de pilotage (9) adaptés à piloter lesdits moyens de manœuvre (33) tenant compte de ladite position relative entre ledit manchon (2) et ledit engin flottant (F) afin de piloter ledit manchon (2) selon lesdits deux degrés de liberté en translation (L1, L2), de préférence pour garder une géolocalisation, voire une verticalité.

13. Engin flottant (F), comportant :
- un système de maintien temporaire (1) selon l'une quelconque des revendications 1 à 12, et
- un système de battage dudit pieu de fondation (E) maintenu dans ledit système de maintien temporaire (1).
